(19) **Europäisches Patentamt / European Patent Office / Office européen des brevets**

(11) **EP 3 295 809 B1**

(12) **EUROPEAN PATENT SPECIFICATION**

(45) Date of publication and mention
of the grant of the patent:
**03.01.2024 Bulletin 2024/01**

(21) Application number: **16796403.0**

(22) Date of filing: **13.05.2016**

(51) International Patent Classification (IPC):
*A23L 31/15* (2016.01)    *A23L 33/145* (2016.01)
*A23L 27/10* (2016.01)    *A23L 27/00* (2016.01)
*A23L 27/24* (2016.01)

(52) Cooperative Patent Classification (CPC):
**A23L 33/145; A23L 27/24; A23L 31/15**

(86) International application number:
**PCT/JP2016/064206**

(87) International publication number:
**WO 2016/186010 (24.11.2016 Gazette 2016/47)**

(54) **METHOD FOR MANUFACTURING DRY COMPOSITION CONTAINING YEAST EXTRACT**

VERFAHREN ZUR HERSTELLUNG VON TROCKENER ZUSAMMENSETZUNG MIT EINEM HEFEEXTRAKT

PROCÉDÉ DE FABRICATION D'UNE COMPOSITION SÈCHE CONTENANT UN EXTRAIT DE LEVURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2015 JP 2015099983**

(43) Date of publication of application:
**21.03.2018 Bulletin 2018/12**

(73) Proprietor: **AJINOMOTO CO., INC.**
**Chuo-ku**
**Tokyo 104-8315 (JP)**

(72) Inventors:
• **NAGAO, Nobuhito**
  **Kawasaki-shi**
  **Kanagawa 210-8681 (JP)**

• **MIZUSHIMA, Toshio**
  **Kawasaki-shi**
  **Kanagawa 210-8681 (JP)**
• **HORI, Tetsuo**
  **Kawasaki-shi**
  **Kanagawa 210-8681 (JP)**

(74) Representative: **Strehl Schübel-Hopf & Partner**
**Maximilianstrasse 54**
**80538 München (DE)**

(56) References cited:
**WO-A1-2013/084822    GB-A- 555 870**
**JP-A- S61 187 741    JP-A- S61 231 966**
**JP-A- 2002 272 413    JP-A- 2006 028 452**
**JP-A- 2013 150 585    JP-A- 2014 143 966**

EP 3 295 809 B1

**Description**

[Technical Field]

The present invention relates to a method of producing a dry composition containing a yeast extract (e.g., yeast extract-containing seasoning), which shows improved adhesion to the facility during production, improved caking during preservation, and high intensity of taste or high quality of taste.

[Background Art]

A yeast extract obtained by extracting yeast is useful as a seasoning, a seasoning starting material or the like. However, yeast extracts have problems in that they show high hygroscopicity and high adherability to facility in powderization, and the obtained powder easily becomes a cake during preservation.

In spray-drying for powderizing a yeast extract, dextrin is generally used. Patent document 1 discloses that caking can be prevented by producing a powder seasoning by adding a yeast fungus residue to extracts and heating and drying the mixture. However, the method is associated with problems of lower intensity of taste and lower quality of taste, since the extract component is diluted by the addition of dextrin and yeast fungus residue. In addition, regions in which avoidance of indication of dextrin is preferred exist in the world.

Patent document 2 discloses a dry beer yeast food containing a dry beer yeast as a main component and characteristically containing a beer yeast extract. The document aims to reduce the bitterness of the dry beer yeast and does not aim at improving adhesion to facility or improving caking. Patent document 3 discloses a process for the preparation of an improved yeast product, which comprises boiling an aqueous suspension of yeast, then separating the solid from the liquid and adding yeast to the liquid and again boiling the mixture prior to drying it.

[Document List]

[Patent documents]

    patent document 1: JP-B-4467075
    patent document 2: JP-A-2002-272413
    patent document 3: GB 555 870 A

[SUMMARY OF THE INVENTION]

[Problems to be Solved by the Invention]

The problem of the present invention is to provide a production method for a dry composition containing a yeast extract, which shows improved adhesion to facility during production and improved caking during preservation, and has high intensity of taste or high quality of taste, and a production method thereof.

[Means of Solving the Problems]

The present inventors have conducted intensive studies and found that the above-mentioned problem can be solved by drying a yeast extract together with the following particular dry yeast. They have further studied and completed the present invention.

[Effect of the Invention]

According to the present invention, a dry composition containing a yeast extract, which shows improved caking and high intensity of taste or high quality of taste, can be provided.

According to the present invention, adhesion of the yeast extract to facility during production (e.g., drying step for powderization) can be prevented, as a result of which the yield can be increased. According to the production method of the present invention, the dry composition containing a yeast extract of the present invention can be produced in a high yield.

[Brief Description of the Drawings]

Fig. 1 shows the results (DM yield) of Experimental Example 1.
Fig. 2 shows the results (glass transition temperature) of Experimental Example 1.
Fig. 3 shows the results (DM yield) of Experimental Example 2.
Fig. 4 shows the results (glass transition temperature) of Experimental Example 2.
Fig. 5 shows the results (cell wall fraction) of Experimental Example 4.
Fig. 6 shows the results (total nitrogen content) of Experimental Example 4.
Fig. 7 shows the results (glass transition temperature) of Experimental Example 4.

[Description of Embodiments]

The invention is set out in the appended set of claims.

The present invention is explained in detail in the following.

In the present specification, the "dry composition" refers to a composition having a water content of not more than 6% at ambient temperature.

In the present invention, as the yeast extract, a yeast extract produced by a known method (e.g., autolysis method, enzyme decomposition method, method of chemical decomposition by acid or alkali, hot water extraction method) can be used. For example, it can be produced by the method described in JP-A-1-281057, the method described in Patent No. 2833037, the method described in JP-B-62-19822, or a method analogous thereto. In the present invention, the yeast extract may be a commercially available product and, for example, Yeastock HG-Ps (trade name, manufactured by ASAHI FOOD & HEALTHCARE, LTD) can be mentioned as a hot water extraction-type yeast extract; and Yeastock S-Ps (trade name, manufactured by ASAHI FOOD & HEALTHCARE, LTD) can be mentioned as an autolysis-type yeast extract.

In the present invention, as a yeast to be used as a starting material for the yeast extract, any edible one such as bread yeast, beer yeast and the like can be used without limitation. For example, yeasts belonging to the genus Saccharomyces, the genus Pichia, the genus Hansenula, the genus Debaryomyces, the genus Torulopsis, the genus Candida and the like can be mentioned.

As a general preparation method of a yeast extract, hot water extraction method, autolysis method and the like are known. The hot water extraction method can afford a yeast extract containing a high content of an active ingredient (e.g., sodium glutamate, sodium inosinate, sodium guanylate, $\gamma$-glutamylcysteine, glutathione etc.) contained in the yeast. As shown in the below-mentioned Experimental Example 1, however, a yeast extract produced by the hot water extraction method was found to have problems of high adherability to facility during a powderizing step and caking during preservation of the obtained yeast extract powder, as compared to a yeast extract produced by an autolysis method.

Therefore, the facility adherability-improving effect and caking-improving effect of the present invention are particularly useful for a yeast extract produced by the hot water extraction and a yeast extract containing an active ingredient at a high content.

The hot water extraction method is, generally, a production method for taking out a particular component (e.g., the above-mentioned active ingredient) from a yeast fungus into hot water. For example, a hot water extraction method is used for the production of a high value-added yeast extract, and a yeast extract highly containing a nucleic acid is extracted with hot water at not less than 90°C.

A yeast extract by hot water extraction can be produced by, for example, the method described in JP-A-1-281057, the method described in Patent No. 2833037, or a method analogous thereto. In addition, a commercially available product (e.g., Yeastock HG-Ps (trade name, manufactured by ASAHI FOOD & HEALTHCARE, LTD)) can also be used.

In the present invention, a yeast extract satisfying one or more requirements selected from the following requirements (1) to (4) is used. The extracts are produced by the hot water extraction method exemplified above.

(1) a yeast extract containing sodium glutamate preferably at not less than 8 mg/g, more preferably not less than 10 mg/g, further preferably not less than 12 mg/g; and generally not more than 400 mg/g, relative to the solid content weight of the yeast extract.

(2) a yeast extract containing sodium inosinate and/or sodium guanylate preferably at not less than 10 mg/g, more preferably not less than 15 mg/g, further preferably not less than 20 mg/g; and generally not more than 300 mg/g, relative to the solid content weight of the yeast extract.

(3) a yeast extract containing $\gamma$-glutamylcysteine preferably at not less than 0.1 mg/g, more preferably not less than 0.5 mg/g, further preferably not less than 1.0 mg/g; and generally not more than 50 mg/g, relative to the solid content weight of the yeast extract.

(4) a yeast extract containing glutathione preferably at not less than 1 mg/g, more preferably not less than 3 mg/g, further preferably not less than 4 mg/g; and generally not more than 150 mg/g, relative to the solid content weight of the yeast extract.

In the present invention, a yeast extract to be used as a starting material (that is, yeast extract before subjecting to a drying step) is preferably a liquid or paste. A yeast extract to be used in the present invention optionally contains other components (e.g., salt, *umami* seasoning, saccharides, organic acids etc.) as long as the effect of the present invention is not inhibited.

In the dry composition of the present invention, the content of the yeast extract is preferably not less than 1 wt% and less than 100 wt%, more preferably not less than 10 wt% and not more than 90 wt%, further preferably not less than 50 wt% and not more than 90 wt%, in a solid content relative to the solid content weight of the dry composition.

In the present specification, "in a solid content" means conversion to a weight per solid content free of water, which is specifically a solid content after drying at 105°C for 4 hr.

Yeast contains water or a soluble extract segment derived from the cytoplasm (also referred to as intracellular component; e.g., protein, amino acid, carbohydrate, nucleic acid, organic acid etc.) and a cell wall fraction.

A dry yeast to be used in the present invention only needs to be a yeast dried without completely separating the extract and the cell wall fraction. That is, it is obtained by drying a yeast containing an extract and a cell wall fraction.

The dry yeast in the present invention is a cultured yeast dried as it is.

A dry yeast to be used as a starting material in the present invention (that is, dry yeast before being subjected to a drying step together with a yeast extract) contains not more than 10 wt% (preferably not more than 7 wt%) of water.

Examples of the yeast as a starting material of a dry yeast include those similar to the yeasts exemplified as the starting material of the yeast extract.

In the present invention, dry yeast is also used as a drying aid of a yeast extract. In the present specification, a drying aid is used to accelerate the speed of drying in powderization.

A dry yeast to be used in the present invention has a total nitrogen content of the dry yeast of preferably not less than 5.5 wt%, more preferably not less than 6 wt%, further preferably not less than 6.2 wt%. A dry yeast to be used in the present invention generally has a total nitrogen content of the dry yeast of not more than 15 wt%.

In the present invention, since the total nitrogen content is within said range, a dry composition having high intensity of taste or high quality of taste, and showing improvement in caking during preservation, as compared to conventional methods using dextrin and yeast fungus residues, can be provided.

The total nitrogen content refers to the total amount of nitrogen contained in the starting material or sample. In the present invention, the total nitrogen content can be measured by conventional methods such as the Kjeldahl method, the Dumas combustion method and the like. In the present invention, the total nitrogen content is a value measured by the Dumas combustion method. The total nitrogen shows the contents of amino acid, peptide, nucleotide and the like, and high total nitrogen becomes an index showing high intensity of taste or high quality of taste.

A dry yeast to be used in the present invention may have a content of a cell wall fraction in the dry yeast of preferably 50 - 90 wt%, more preferably 55 - 80 wt%, further preferably 60 - 75 wt%.

When a proportion of the cell wall fraction is less than 50 wt%, the caking-improving effect tends to decrease during preservation. When the cell wall fraction exceeds 90 wt%, the intensity of taste or quality of taste tends to decrease due to a decrease in the extract.

A cell wall fraction in the dry yeast can be measured according to, for example, the method described in WO 2013/065732.

A cell wall fraction can be specifically measured by the following method.

(cell wall fraction measurement method)

A dry yeast 10% solution is adjusted to 40°C, pH6, a cell wall dissolving enzyme "Denateam GEL" (manufactured by Nagase ChemteX Corporation) is added at 0.003 wt% and the mixture is reacted for 5 hr. After a heat treatment at 70°C for 20 min, the mixture is centrifuged. The pellet part is dried under reduced pressure for 24 hr to give a dried product of the cell wall fraction, and the weight thereof is measured to determine the proportion of the cell wall fraction.

In the present invention, a dry yeast having a value calculated by dividing a cell wall fraction (wt%) in the dry yeast by a total nitrogen content (wt%) in the dry yeast (value calculated by formula: cell wall fraction (wt%) in dry yeast/total nitrogen content of dry yeast (wt%)) of not more than 16, preferably not more than 14, more preferably not more than 12 is used. A dry yeast to be used in the present invention has the above-mentioned calculated value of generally not less than 3. A measurement method of the content of the cell wall fraction and the total nitrogen is as mentioned above.

A dry yeast having the total nitrogen content of the dry yeast, which is within the above-mentioned range, and a dry yeast having a cell wall fraction in the dry yeast, which is within the above-mentioned range, can be produced by a known method.

In the present invention, the dry yeast used may be a commercially available product and, for example, Yeastock HG-DY (trade name, manufactured by ASAHI FOOD & HEALTHCARE, LTD), Inactive dry bakers yeast (trade name, manufactured by EKOPRODUKTAS), Brewers Yeast (trade name, manufactured by SojuzProduktiPitania), and LBI2245 (trade name, manufactured by LALLEMANDBIO-INGREDIENTS) can be mentioned.

In the dry composition produced with the method of the present invention, the content of the dry yeast is preferably not less than 1 wt% and less than 100 wt%, more preferably not less than 10 wt% and less than 100 wt%, further preferably not less than 10 wt% and not more than 70 wt%, further more preferably not less than 10 wt% and not more than 50 wt%, in a solid content, relative to the solid content weight of the dry composition.

In the dry composition, the weight ratio rate of the yeast extract and the dry yeast is preferably 1:20 - 20:1, more preferably 1:10 - 10:1, further preferably 1:5 - 5:1, in a solid content.

The dry composition is obtained by drying a yeast extract and a dry yeast.

While a drying method is not particularly limited, for example, spray-dry, freeze-dry, and drying under reduced pressure can be mentioned, with preference given to spray-dry.

The spray-drying can be performed, for example, using a spray-dryer (e.g., OHKAWARA KAKOHKI CO., LTD. L12 type (trade name, manufactured by OHKAWARA KAKOHKI CO., LTD.)).

Specifically, for example, a yeast extract and a dry yeast are mixed, and the mixture is spray dried by a spray-dryer, whereby the dry composition of the present invention can be obtained.

The dry composition may contain components (e.g., salt, dextrin etc.) other than the yeast extract and the dry yeast.

The dry composition can be utilized as a seasoning, a seasoning starting material and the like for foods (e.g., soup, snack). The amount thereof to be used for food can be appropriately determined according to the kind of the food.

The method as claimed produces a dry composition having a value calculated by dividing a cell wall fraction (wt%) in the dry yeast by a total nitrogen content (wt%) in the dry yeast of not more than 16, which method comprises a step of drying the yeast extract together with a dry yeast. Examples and the amount of use of the yeast extract and dry yeast (content in the dry composition), total nitrogen content, drying step and the like in the method are the same as the examples, amounts and steps explained for the aforementioned dry composition of the present invention.

In the present invention, adhesion to facility can be evaluated by the solid content yield (%) in the spray-drying. In the method of the present invention, adhesion to facility during production is suppressed, and the solid content yield can be improved.

In the present invention, improvement of caking during preservation can be evaluated by measuring the glass transition temperature of the dry composition produced with the method of the present invention.

The glass transition temperature can be increased, by which improvement of caking during preservation can be expected.

The intensity of taste and the quality of taste can be evaluated by sensory evaluation of the dry composition of the present invention added to a food system. The dry composition can enhance the intensity of taste and the quality of taste of food when it is formulated as a seasoning, as compared to the use of dextrin, yeast fungus debris (residue after extraction of extract in fungus from yeast fungus) and the like.

[Examples]

While the present invention is explained in more detail in the following by referring to Examples, Comparative Examples and Experimental Examples, the present invention is not limited thereby.

In the following Examples, Comparative Examples, and Experimental Examples, the following were used. autolysis-type yeast extract: Yeastock S-Ps (trade name, manufactured by ASAHI FOOD & HEALTHCARE, LTD) hot water extraction-type yeast extract: Yeastock HG-Ps (trade name, manufactured by ASAHI FOOD & HEALTHCARE, LTD) hot water extraction-type yeast extract: yeast extract A (Yeast culture was performed under conditions of Example 5 in JP-B-2833037 for 60 hr, and extract was extracted by hot water extraction, hereinafter to be referred to as yeast extract A.)

dry yeast: Yeastock HG-DY (trade name, manufactured by ASAHI FOOD & HEALTHCARE, LTD)
dry yeast: Inactive dry bakers yeast (trade name, manufactured by EKOPRODUKTAS)
dry yeast: Brewers Yeast (trade name, manufactured by SojuzProduktiPitania)
dry yeast: LBI2245 (trade name, manufactured by LALLEMANDBIO-INGREDIENTS)
dextrin: Pinedex #1 (trade name, manufactured by Matsutani Chemical Industry Co., Ltd.)

In the following Examples, Comparative Examples, and Experimental Examples, spray-drying was performed using the following method and conditions.

```
[spray-dry method, and calculation method of solid content
yield (%)]
```

A spray-dryer is previously washed, and the temperature humidity environment in the inside is made constant with water spray. A mixture of a yeast extract and a dry yeast, in which the total amount of the solid content is a given amount, is spray dried. The obtained powder is measured, and the solid content amount is measured and divided by the solid content amount of the charged starting material to give a solid content yield (%).

[spray-dry conditions]

spray-dryer: OHKAWARA KAKOHKI CO., LTD. L12 type (trade name, manufactured by OHKAWARA KAKOHKI CO., LTD.)
spray-dry conditions:

temperature: hot air inlet 185°C, cyclone outlet 105°C
rotating speed: 18000 rpm
flow: 50 ml/min

In the following Experimental Examples, the glass transition temperature was measured by the following method under the following conditions.

[measurement method]

A sample is humidity-conditioned to a loss on drying value desired to be measured, and the loss on drying value is stabilized. After stabilization, the glass transition temperature is measured by a given device. The loss on drying refers to a ratio of weight that decreased by drying the sample at 105°C for 4 hr. In the sample used in this study, it is equivalent to a water value. In this Example, the glass transition temperature was measured under the conditions described in the following [measurement condition].

[measurement condition]

measurement device: DSC6100 (manufactured by Seiko Instruments Inc.)
DSC (Differential scanning calorimetry) measurement condition:

initial temperature: -30°C
termination temperature: 180°C
temperature rise: 10°C/min
record: 0.5 sec interval
cell: Ag 70 $\mu$l

[Experimental Example 1] comparison of autolysis-type yeast extract and hot water extraction-type yeast extract

(1) evaluation of adherability

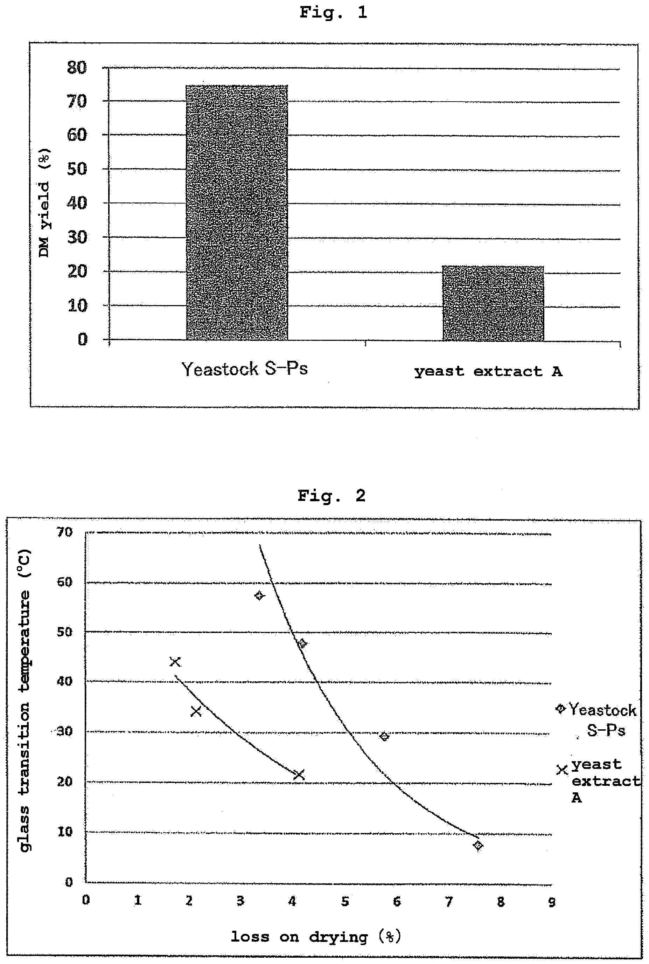

Each of a yeast extract produced by autolysis (trade name: Yeastock S-Ps) and a yeast extract A produced by hot water extraction was spray-dried using the above-mentioned method and conditions.
The solid content yield (DM yield) (%), sodium glutamate content percentage (mg/g), content percentage (mg/g) of sodium inosinate and/or sodium guanylate, $\gamma$-glutamylcysteine content percentage (mg/g) and glutathione content percentage (mg/g) of the obtained dry yeast extracts were measured. The results are shown in Table 1. The results of the DM yield are shown in Fig. 1.

Table 1

| yeast extract | DM yield (%) | sodium glutamate content percentage (mg/g) | sodium inosinate and/or sodium guanylate content percentage (mg/g) | γ-glutamylcysteine content percentage (mg/g) | glutathione content percentage (mg/g) |
|---|---|---|---|---|---|
| Yeastoc k S-Ps (trade name) | 74.9 | 15.9 | 8.6 | 0.05 | 0.066 |
| yeast extract A | 22.0 | 14.6 | 25 | 1.2 | 4.97 |

(2) evaluation of glass transition temperature

The glass transition temperature of each of a yeast extract produced by autolysis (trade name: Yeastock S-Ps) and a yeast extract A produced by hot water extraction was measured using the above-mentioned method and conditions. The results are shown in Fig. 2.

From the above-mentioned results, it was shown that the DM yield (%) of the yeast extract produced by hot water extraction is low as compared to that of the yeast extract produced by autolysis (Fig. 1).

In addition, from the above-mentioned results, it was shown that the glass transition temperature of the yeast extract produced by hot water extraction is low as compared to that of the yeast extract produced by autolysis (Fig. 2). The results confirmed that the yeast extract produced by hot water extraction shows easy adhesion to facility during production and easy caking during preservation.

[Example 1]

Yeast extract A and a dry yeast (trade name: Yeastock HG-DY) were sufficiently mixed at a solid content weight ratio of 8:2. Then, the mixture was spray dried under the drying conditions described above to give a dry composition having a solid content weight ratio of the yeast extract and the dry yeast of 8:2 (yeast extract:dry yeast).

[Example 2]

In the same manner as in Example 1 except that the solid content weight ratio of the yeast extract A and dry yeast (trade name: Yeastock HG-DY) was 6:4 (yeast extract:dry yeast), a dry composition was obtained.

[Comparative Example 1]

In the same manner as in Example 1 except that the dry yeast was not added, a dry composition was obtained.

[Comparative Example 2]

In the same manner as in Example 1 except that the dry yeast (trade name: Yeastock HG-DY) was substituted by dextrin (trade name: Pinedex #1), a dry composition was obtained.

[Experimental Example 2] effect of addition of dry yeast to hot water extraction-type yeast extract

(1) evaluation of adherability

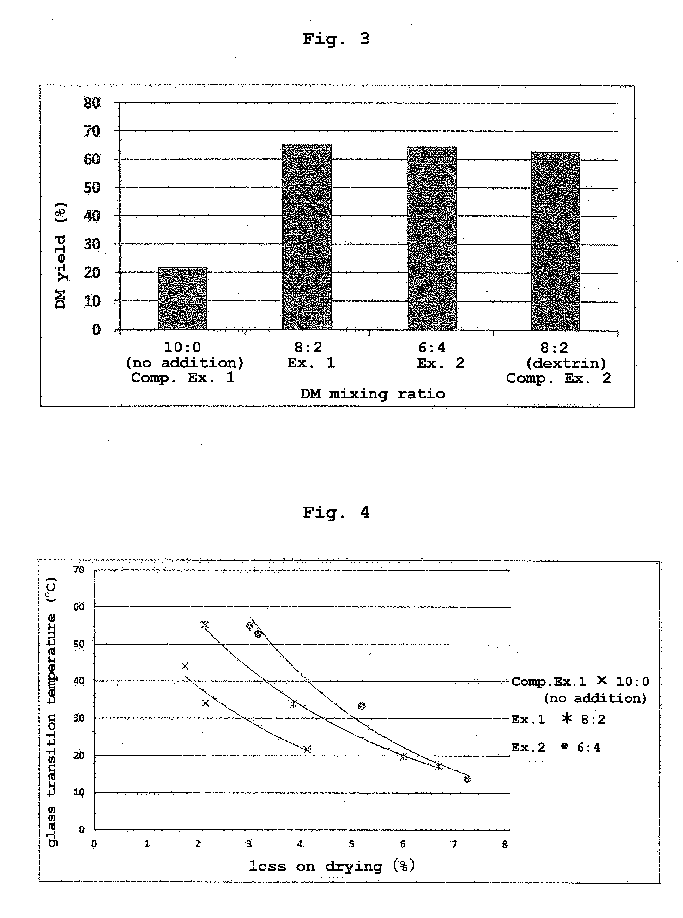

The solid content yield (DM yield) (%) of the dry compositions obtained in Examples 1, 2 and Comparative Examples 1, 2 was measured. The results are shown in Table 2 and Fig. 3.

Table 2

| | yeast extract | aid (trade name) | solid content weight ratio (yeast extract:aid) | DM yield (%) |
|---|---|---|---|---|
| Comparative Example 1 | yeast extract A | dry yeast (Yeastock HG-DY) | 10:0 | 22.0 |
| Example 1 | | | 8:2 | 65.2 |
| Example 2 | | | 6: 4 | 64.5 |
| Comparative Example 2 | | dextrin (Pinedex #1) | 8:2 | 62.8 |

(2) evaluation of glass transition temperature

The glass transition temperature of the dry compositions of Examples 1, 2 and Comparative Example 1 was measured using the above-mentioned method and conditions. The results are shown in Fig. 4.

From the above-mentioned results, it was shown that the DM yield increases in the dry compositions of Examples 1 and 2, which were obtained by adding a dry yeast to a dry extract and spray-drying the mixture, as compared to the dry composition of Comparative Example 1 which was obtained by spray-drying without addition of an aid to a dry extract (Fig. 3).

In addition, from the above-mentioned results, it was shown that the glass transition temperature is high in the dry compositions of Examples 1 and 2, which were obtained by adding a dry yeast to a dry extract and spray-drying the mixture, as compared to the dry composition of Comparative Example 1 which was obtained by spray-drying without addition of an aid to a dry extract (Fig. 4). The results show that improvement of adhesion to facility during production and caking during preservation can be expected in the dry composition produced with the method of the present invention.

[Experimental Example 3]

Each aid [dry yeast (trade name: Yeastock HG-DY), dextrin, or yeast fungus debris (fungus debris of hot water extraction-type yeast extract)] was added to a yeast extract (Yeastock HG-Ps (trade name), or yeast extract A) to a solid content weight ratio of 8:2 (yeast extract:aid), and the mixture was spray-dried to give a dry composition. The dry composition was added to the food system shown in Tables 3-1 and 3-2 at the addition concentration indicated in the Tables. An evaluator evaluated the intensity of taste in 5 grades of 1 - 5 (1 means the weakest taste and 5 means the strongest taste), the quality of taste in 5 grades of 1 - 5 (1 means strong quality of taste other than that of yeast extract and 5 means strong and dense quality of taste of yeast extract), and the total evaluation in 5 grades of 1 - 5 (lower grade of the two). The results are shown in Tables 3-1 and 3-2.

[Table 3-1]

| | | | evaluation of intensity of taste and quality of taste | | | | | | | | |
| <yeast extract: Yeastock HG-Ps (trade name)> | | | | | | | | | | | |
| food system | manufacturer | addition concentration | dextrin | | | yeast fungus debris | | | dry yeast | | |
| | | | intensity | quality | total | intensity | quality | total | intensity | quality | total |
| soup | onion soup | Campbell | 0.075% | 3 | 3 | 3 | 4 | 2 | 2 | 5 | 5 | 5 |
| | beef consomme | Meiji | 0.075% | 3 | 3 | 3 | 4 | 2 | 2 | 5 | 5 | 5 |
| | tomato soup | Campbell | 0.075% | 3 | 3 | 3 | 4 | 2 | 2 | 5 | 5 | 5 |
| | clam chowder | Campbell | 0.075% | 3 | 3 | 3 | 4 | 3 | 3 | 5 | 5 | 5 |
| | corn potage | Campbell | 0.075% | 3 | 3 | 3 | 4 | 2 | 2 | 5 | 5 | 5 |
| snack | cheese | Glico | 0.050% | 3 | 3 | 3 | 4 | 3 | 3 | 5 | 5 | 5 |

[Table 3-2]

<yeast extract: yeast extract A>

| food system | | manufacturer | addition concentration | evaluation of intensity of taste and quality of taste | | | | | | | | |
|---|---|---|---|---|---|---|---|---|---|---|---|---|
| | | | | dextrin | | | yeast fungus debris | | | dry yeast | | |
| | | | | intensity | quality | total | intensity | quality | total | intensity | quality | total |
| soup | onion soup | Campbell | 0.075% | 3 | 3 | 3 | 4 | 3 | 3 | 5 | 5 | 5 |
| | beef consomme | Meiji | 0.075% | 3 | 3 | 3 | 4 | 2 | 2 | 5 | 5 | 5 |
| | tomato soup | Campbell | 0.075% | 3 | 3 | 3 | 4 | 2 | 2 | 5 | 5 | 5 |
| | clam chowder | Campbell | 0.075% | 3 | 3 | 3 | 4 | 3 | 3 | 5 | 5 | 5 |
| | corn potage | Campbell | 0.075% | 3 | 3 | 3 | 4 | 2 | 2 | 5 | 5 | 5 |
| snack | cheese | Glico | 0.050% | 3 | 3 | 3 | 4 | 3 | 3 | 5 | 5 | 5 |

From the above-mentioned results, it was found that the dry composition produced with the method of the present invention, obtained by drying a yeast extract and a dry yeast, shows strong intensity of taste or quality of taste when it is formulated as a seasoning, as compared to when dextrin and yeast fungus debris were used.

[Experimental Example 4] evaluation of improvement of using various dry yeasts

(1) measurement of cell wall fraction and total nitrogen content

The cell wall fraction and total nitrogen content of various dry yeasts and yeast fungus debris shown in Table 4 were measured according to the following method and conditions.

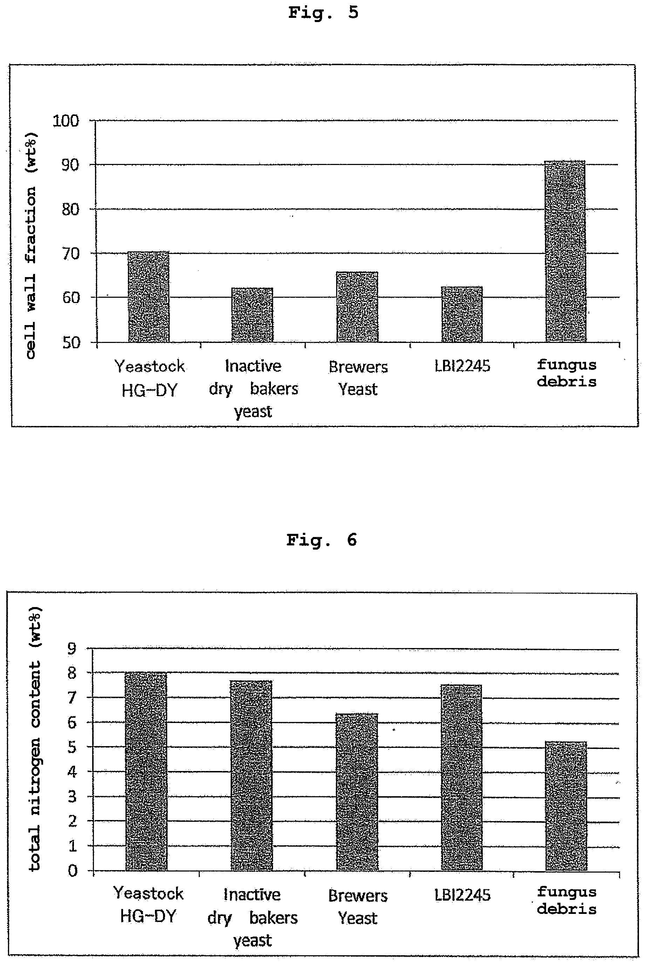

The cell wall fraction was measured according to the method described in Example 5 of WO 2013/065732. A 10% dry yeast solution was adjusted to 40°C, pH6, "Denateam GEL" was added at 0.003 wt%, and the mixture was reacted for 5 hr. After a heat treatment at 70°C for 20 min, the mixture was centrifuged. The pellet part was dried under reduced pressure for 24 hr to give a dried product of a cell wall fraction, and the weight thereof was measured to determine the proportion of the cell wall fraction. The total nitrogen content was determined by the Dumas combustion method. The results are shown in Table 4, Figs. 5, 6.

[Table 4]

| | | cell wall fraction (wt%) | total nitrogen content (wt%) | cell wall fraction/total nitrogen content |
|---|---|---|---|---|
| dry yeast (trade name) | Yeastock HG-DY | 70.5 | 8.0 | 8.8 |
| | Inactive dry bakers yeast | 62.3 | 7.7 | 8.1 |
| | Brewers Yeast | 65.9 | 6.4 | 10.3 |
| | LBI2245 | 62.5 | 7.5 | 8.3 |
| yeast fungus debris | | 91.0 | 5.3 | 17.2 |

(2) evaluation of glass transition temperature

Various dry yeasts (trade name: Yeastock HG-DY, trade name: Inactive dry bakers yeast, trade name: Brewers Yeast, trade name: LBI2245) were added to yeast extract A each at a solid content weight ratio of 8:2 (yeast extract:dry yeast), and the mixtures were spray-dried to give dry compositions. The glass transition temperature thereof was measured using the above-mentioned method and conditions. As a control, the glass transition temperature of a yeast extract obtained by a similar treatment but without addition of a dry yeast was measured in the same manner.

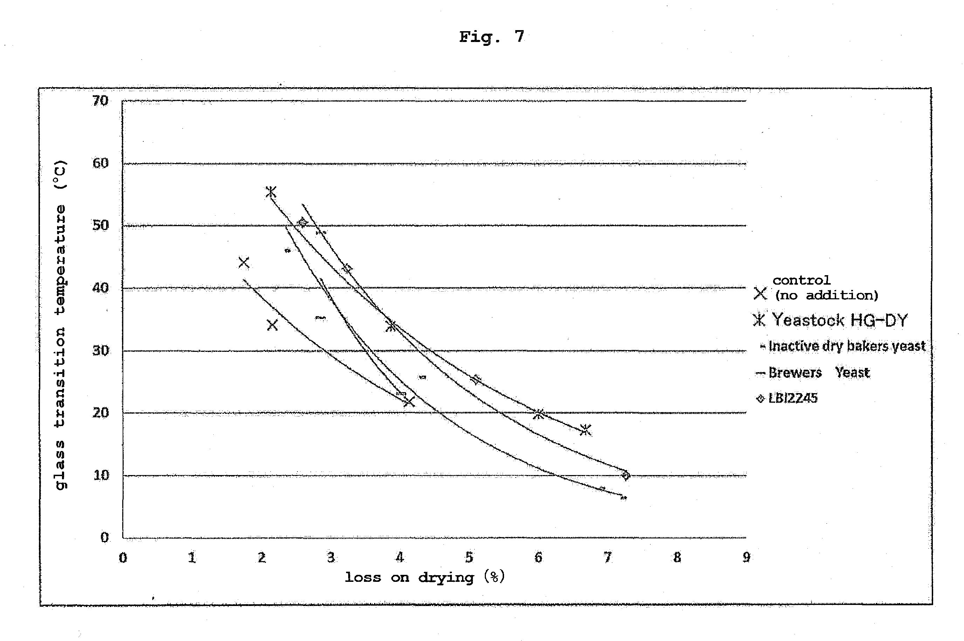

The results are shown in Fig. 7.

From the above-mentioned results, it was shown that the glass transition temperature becomes high when any dry yeast is used, as compared to the absence of a dry yeast (control). The results show that improvement of adhesion to facility during production and caking during preservation can be expected in the dry composition produced with the method of the present invention.

**Claims**

1. A method of suppressing the adhesion of yeast extract to facility during production of a dry composition, comprising a step of drying a yeast extract together with a dry yeast containing not more than 10 wt% of water and containing a cultured yeast dried as it is, and having a value calculated by dividing a cell wall fraction (wt%) in the dry yeast by a total nitrogen content (wt%) in the dry yeast of not more than 16, wherein the yeast extract is produced by hot water extraction and wherein the yeast extract comprises one or more selected from the group consisting of (1) sodium glutamate at a content of not less than 8 mg/g, (2) sodium inosinate and/or sodium guanylate at a content of not less than 10 mg/g, (3) γ-glutamylcysteine at a content of not less than 0.1 mg/g, and (4) glutathione at a content of not less than 1 mg/g, relative to the solid content weight of the yeast extract.

2. The method according to claim 1, wherein the total nitrogen content of the dry yeast is not less than 5.5 wt%.

3. The method according to claim 1 or 2, wherein a proportion of the cell wall fraction in the dry yeast is 50 - 90 wt%.

**4.** The method according to claim 1 or 2, wherein an amount of the dry yeast to be used is not less than 1 wt% and less than 100 wt% in a solid content relative to that of the aforementioned composition.

**5.** The method according to any one of claims 1 to 4, wherein the drying step is a spray-dry step.

**6.** The method according to any one of claims 1 to 5, wherein the aforementioned composition is a seasoning.


**Patentansprüche**

**1.** Verfahren zur Unterdrückung des Anhaftens von Hefeextrakt an einer Einrichtung während der Herstellung einer Trockenzusammensetzung, umfassend einen Schritt des Trocknens eines Hefeextrakts zusammen mit einer Trockenhefe, die nicht mehr als 10 Gew.-% Wasser enthält und eine kultivierte Hefe, die so getrocknet ist, wie sie ist, enthält und einen Wert, der berechnet wird, indem der Zellwandanteil (Gew.-%) in der Trockenhefe durch den Gesamtstickstoffgehalt (Gew.-%) in der Trockenhefe geteilt wird, von nicht mehr als 16 aufweist, wobei der Hefeextrakt durch Heißwasserextraktion hergestellt wird und wobei der Hefeextrakt ein oder mehrere Mitglieder der Gruppe enthält, die aus (1) Natriumglutamat mit einem Gehalt von nicht weniger als 8 mg/g, (2) Natriuminosinat und/oder Natriumguanylat mit einem Gehalt von nicht weniger als 10 mg/g, (3) γ-Glutamylcystein mit einem Gehalt von nicht weniger als 0.1 mg/g, und (4) Glutathion mit einem Gehalt von mindestens 1 mg/g, bezogen auf das Gewicht des Feststoffgehalts des Hefeextrakts, besteht.

**2.** Verfahren nach Anspruch 1, wobei der Gesamtstickstoffgehalt der Trockenhefe nicht weniger als 5,5 Gew.-% beträgt.

**3.** Verfahren nach Anspruch 1 oder 2, wobei der Anteil der Zellwandfraktion in der Trockenhefe 50 bis 90 Gew.-% beträgt.

**4.** Verfahren nach Anspruch 1 oder 2, wobei die Menge der zu verwendenden Trockenhefe nicht weniger als 1 Gew.-% und weniger als 100 Gew.-% Feststoffgehalt, bezogen auf die vorgenannte Zusammensetzung, ist.

**5.** Verfahren nach einem der Ansprüche 1 bis 4, wobei der Trocknungsschritt ein Sprühtrockenschritt ist.

**6.** Verfahren nach einem der Ansprüche 1 bis 5, wobei die vorgenannte Zusammensetzung ein Gewürz ist.


**Revendications**

**1.** Procédé de suppression de l'adhésion d'extrait de levure à un équipement durant la production d'une composition sèche, comprenant une étape de séchage d'un extrait de levure conjointement avec une levure sèche contenant au plus 10 % en poids d'eau et contenant une levure cultivée séchée telle quelle, et ayant une valeur, calculée par division de la fraction de paroi cellulaire (% en poids) dans la levure sèche par la teneur totale en azote (% en poids) de la levure sèche, non supérieure à 16, dans lequel l'extrait de levure est produit par extraction à l'eau chaude et dans lequel l'extrait de levure comprend un ou plusieurs choisis dans le groupe constitué par (1) le glutamate de sodium en une teneur non inférieure à 8 mg/g, (2) l'inosinate de sodium et/ou le guanylate de sodium en une teneur non inférieure à 10 mg/g, (3) la γ-glutamylcystéine en une teneur non inférieure à 0,1 mg/g, et (4) le glutathion en une teneur non inférieure à 1 mg/g, par rapport au poids de la teneur en matières sèches de l'extrait de levure.

**2.** Procédé selon la revendication 1, dans lequel la teneur totale en azote de la levure sèche n'est pas inférieure à 5,5 % en poids.

**3.** Procédé selon la revendication 1 ou 2, dans lequel la proportion de la fraction de paroi cellulaire dans la levure sèche est de 50 à 90 % en poids.

**4.** Procédé selon la revendication 1 ou 2, dans lequel la quantité de la levure sèche à utiliser n'est pas inférieure à 1 % en poids et est inférieure à 100 % en poids, en teneur en matières sèches, par rapport à celle de la composition susmentionnée.

**5.** Procédé selon l'une quelconque des revendications 1 à 4, dans lequel l'étape de séchage est une étape de séchage par pulvérisation.

**6.** Procédé selon l'une quelconque des revendications 1 à 5, dans lequel la composition susmentionnée est un assaisonnement.

## Fig. 1

## Fig. 2

**Fig. 3**

**Fig. 4**

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4467075 B
- JP 2002272413 A
- GB 555870 A
- JP 1281057 A
- JP 2833037 B
- JP 62019822 B
- WO 2013065732 A